Europäisches Patentamt

European Patent Office

Office européen des brevets

(11) Veröffentlichungsnummer : **0 049 006**
**B1**

(12) **EUROPÄISCHE PATENTSCHRIFT**

(45) Veröffentlichungstag der Patentschrift :
09.01.85

(51) Int. Cl.⁴ : **F 16 J. 1/00**

(21) Anmeldenummer : **81200886.0**

(22) Anmeldetag : **06.08.81**

(54) Verbundkolben.

(30) Priorität : 30.09.80 DE 3036792

(43) Veröffentlichungstag der Anmeldung :
07.04.82 Patentblatt 82/14

(45) Bekanntmachung des Hinweises auf die Patenterteilung : 09.01.85 Patentblatt 85/02

(84) Benannte Vertragsstaaten :
DE FR GB IT

(56) Entgegenhaltungen :
DE-A- 2 648 392
DE-A- 2 916 847
PLASTIQUES MODERNES ET ELASTOMERES, Band
28, Mai 1976, Seiten 74-76 Paris, FR. "Polyimide
armé-deux applications de pointe"
MACHINE DESIGN, Band 52, Nr. 10, 8. Mai 1980,
Seiten 24-26 Cleveland, Ohio, U.S.A.
"Handbuch der Kraftfahrzeugtechnik", W. Heyne
Verlag, München 1973, Seiten 250-255

(73) Patentinhaber : **KOLBENSCHMIDT Aktiengesellschaft**
**Christian-Schmidt-Strasse 8/12 Postfach 1351**
**D-7107 Neckarsulm (DE)**

(72) Erfinder : **Schellmann, Klaus, Dipl.-Ing.**
**Schlossgartenstrasse 10**
**D-7251 Hemmingen (DE)**
Erfinder : **Sander, Wilfried, Dipl.-Ing.**
**Ahornweg 11**
**D-7107 Neckarsulm (DE)**

(74) Vertreter : **Fischer, Ernst, Dr.**
**Reuterweg 14**
**D-6000 Frankfurt am Main 1 (DE)**

EP 0 049 006 B1

**Beschreibung**

Die Erfindung betrifft einen Kolben für Brennkraftmaschinen, bestehend aus glasfaserverstärktem Kunststoff, wobei der brennraumseitige Teil des Kolbenbodens und ggfs. ein Teil oder die ganze Ringpartie aus einem Leichtmetall-Kolbenwerkstoff bestehen.

Durch die Senkung des Gewichts von Bauteilen moderner Brennkraftmaschinen kann der Kraftstoffverbrauch verringert und somit ein Anteil zur Energieeinsparung geleistet werden. Außer dieser Forderung nach geringstmöglichem Gewicht werden an eine Brennkraftmaschine hinsichtlich ihres Geräusch- und Schwingungsverhaltens wegen der gestiegenen Komfortansprüche hohe Anforderungen gestellt. Ein Teil dieser Entwicklungsziele kann mit dem Einsatz von leichten Kolben durch deren kleinere oszillierende Massen erreicht werden. Deshalb wird seit einer Reihe von Jahren u. a. auch die Möglichkeit untersucht, bei der Kolbenherstellung die konventionellen metallischen Wertstoffe durch leichtere Werkstoffe zu ersetzen. Hierbei spielen insbesondere die Kunststoffe eine immer wichtigere Rolle. So wird in VDI-Nachrichten Nr. 26/27.06.80 über einen zu rund 90 % aus faserverstärktem Kunststoff bestehenden Otto-Motor berichtet, bei dem bereits Pleuel, Kolben, Kolbenbolzen und Kolbenringe sowie weitere Bauteile aus Kunststoff bestehen.

In der Z. « Plastiques Modernes et Elastomères » Bd. 28, 1976, S. 74-76 ist eine Leichtmetallkolben beschrieben, dessen Schaft aus glasfaserverstärktem Kunststoff besteht, wodurch der Kolbenschaft thermisch isoliert und damit eine Verringerung der Wärmeabfuhr erreicht werden soll.

Auf der SAE-Konferenz, Detroit vom 25. bis 29.02.1980, wurde ferner ein aus einem faserverstärkten Kunststoff bestehender Kolben gezeigt, dessen den Brennraum begrenzende Wand sowie die Ringpartie aus einer Leichtmetall-Kolbenlegierung ausgeführt sind. Durch eine solche Kolbenkonstruktion wird nicht nur das Gewicht und damit der Kraftstoffverbrauch gesenkt, sondern auch die Massenkräfte und die Geräuschentwicklung beachtlich herabgesetzt, weil der Kunststoff den Körperschall besser als ein metallischer Werkstoff absorbiert.

Nun darf allerdings eine auf diese Weise erreichte Gewichtsreduzierung nicht zu Lasten der Betriebssicherheit und der Lebensdauer des Kolbens gehen. Durch die im Vergleich zu Leichtmetallen geringere Wärmeleitfähigkeit von Kunststoffen stellen sich höhere Temperaturen ein, so daß die Warmfestigkeit des Kunststoffs leicht überschritten werden kann. Auch führt eine zu große Aufheizung der den Brennraum begrenzenden Wand allgemein zu einer Verringerung des Liefergrades oder beispielsweise bei Otto-Motoren zu frühzeitigem Auftreten einer klopfenden Verbrennung. Diesem Nachteil wird auch durch eine einfache, vorstehend beschriebene Verbundkolbenkonstruktion nicht genügend abgeholfen, da mangels geeigneter Wärmeableitungselemente sich die Wärme in der den Brennraum begrenzenden Leichtmetallwand staut.

Es ist daher die Aufgabe der vorliegenden Erfindung, eine verbesserte Wärmeabführung aus dem den Brennraum begrenzenden Kolbenboden, bestehend aus einer Leichtmetall-Kolbenlegierung, zu schaffen, um klopfende Verbrennung sowie eine Überschreitung der Warmfestigkeit des Kunststoffs und damit ein Leistungsabfall zu vermeiden.

Die Lösung dieser Aufgabe besteht darin, daß bei dem eingangs beschriebenen Kolben der Kolbenboden einen nur aus Leichtmetall-Kolbenwerkstoff bestehenden Teil aufweist, dessen Innenseite durch Anspritzkühlung direkt kühlbar ist.

Bei einem Kolben, bei dem sowohl der Kolbenboden als auch die Ringpartie aus einem Leichtmetall-Kolbenwerkstoff bestehen, ist es, ebenso wie bei dem im « Handbuch für Kraftfahrzeugtechnik, W. Heyne Verlag, München 1973 », S. 250-255 dargestellt, auch möglich, einen ringförmigen Kühlkanal für Umlauföl zwischen dem Kunststoff- und dem Leichtmetallteil hinter der Ringpartie anzuordnen.

Die mit dem erfindungsgemäß gestalteten Verbundkolben erzielten Vorteile bestehen insbesondere darin, daß die Betriebssicherheit und eine vergleichsweise hohe Lebensdauer gewährleistet sind, ohne dadurch das Gewicht des Kolbens wesentlich zu erhöhen. Im übrigen bleiben alle Vorteile, die ein aus glasfaserverstärktem Kunststoff bestehender Kolben besitzt, voll erhalten. So wird beim Schaftanlagenwechsel des Kolbens im Bereich der Totpunkte bei vorhandenem Kolbenspiel der durch die Querbewegung verursachte Stoßvorgang infolge der größeren Schaftelastizität weicher abgebaut, wodurch die Geräuschentwicklung verringert wird. Die Schaftflächen kommen bei Belastung mit einer größeren Tragfläche an der Zylinderwand zur Anlage. Die mittlere Flächenpressung wird dadurch geringer.

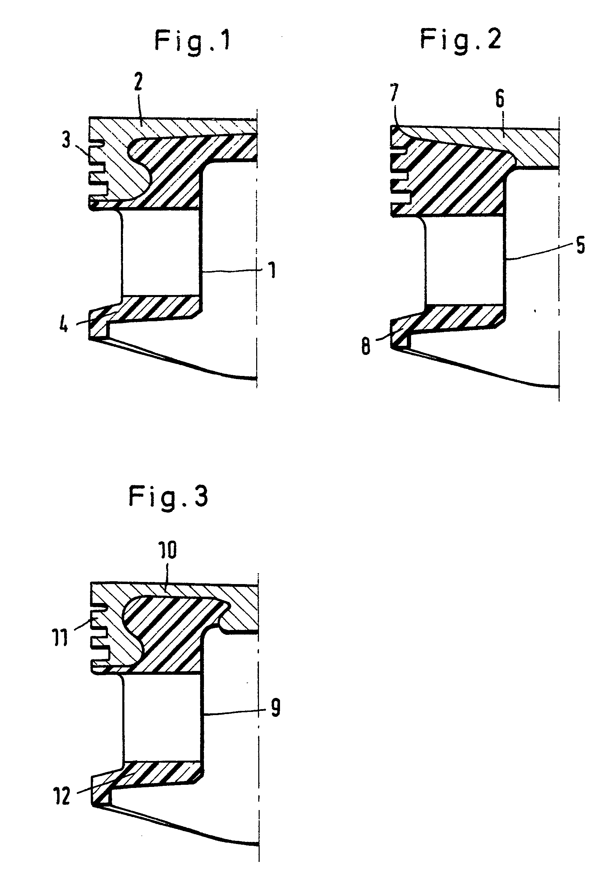

Der erfindungsgemäße Kolben ist in den Zeichnungen, Figur 2 und 3, beispielhaft dargestellt und wird nachfolgend erläutert :

Figur 1 zeigt den Längsschnitt durch die Bolzenebene eines zum Stand der Technik gehörenden Verbundkolbens 1, bei dem der Kolbenboden 2 und die Ringpartie 3 aus einem Leichtmetall-Kolbenwerkstoff bestehen, während der übrige daran angegossene Teil 4 des Kolbens aus glasfaserverstärktem Epoxidharz gebildet ist.

In Figur 2 ist der Längsschnitt durch die Bolzenebene eines erfindungsgemäß ausgebildeten Kolbens 5 dargestellt, bei dem der überwiegende Teil des Kolbenbodens 6 bis auf einen schmalen Randbereich 7 aus einer Leichtmetall-Kolbenlegierung und der übrige Teil 8 des Kolbens 5 aus glasfaserverstärktem Epoxidharz bestehen. Der Kolbenboden 6 bildet einen Teil der Innenseite des Kolbens 5, die durch Anspritzkühlung direkt kühlbar ist.

In Figur 3 ist der Längsschnitt durch die Bolzenebene eines erfindungsgemäß gestalteten Kolbens 9 wiedergegeben, bei dem der Kolbenboden 10 und die Ringpartie 11 aus einem Leichtmetall-Kolbenwerkstoff gebildet sind, der einen Teil der Innenseite des Kolbens 9 bildet. Der übrige Teil 12 des Kolbens besteht aus einem glasfaserverstärktem Epoxidharz.

**Anspruch**

Verbundkolben (5, 9) für Brennkraftmaschinen, bestehend aus glasfaserverstärktem Kunststoff, wobei der brennraumseitige Teil des Kolbenbodens (6, 10) und ggfs. ein Teil oder die ganze Ringpartie (11) aus einem Leichtmetall-Kolbenwerkstoff bestehen, dadurch gekennzeichnet, daß der Kolbenboden (6, 10) einen nur aus Leichtmetall-Kolbenwerkstoff bestehenden Teil aufweist, dessen Innenseite durch Anspritzkühlung direkt kühlbar ist.

**Claim**

An internal combustion engine composite piston (5, 9) comprising a body formed of a fiber-reinforced plastic material wherein the outer piston head member (6, 10) defining the combustion chamber and in case the entire ring-carrying portion (11) or part thereof are formed of a light alloy piston material characterized in that the piston head member (6, 10) totally consists of a light alloy piston material is directly cooled on the inside by oil spraying.

**Revendication**

Piston composite (5, 9) pour moteurs à combustion interne, constitué en une matière synthétique renforcée par des fibres de verre et dans lequel la partie de la tête (6, 10) du piston, située du côté de la chambre de combustion, et éventuellement une partie ou l'ensemble (11) de la zone des segments sont constitués en un matériau pour piston formé d'un métal léger, caractérisé par le fait que la tête (6, 10) du piston comporte une partie constituée en un matériau pour piston formé d'un métal léger et dont la face intérieure peut être refroidie directement par l'intermédiaire d'un refroidissement par pulvérisation.

# Fig.1

# Fig.2

# Fig.3